# FASCICULE DE BREVET EUROPEEN

(11) **EP 2 338 393 B1**
(45) Date de publication et mention de la délivrance du brevet: **03.04.2013**
(21) Numéro de dépôt: 10306478.8
(22) Date de dépôt: 21.12.2010
(51) Int. Cl.: A47J 43/07

(54) **Pied de travail pour boîtier moteur d'appareil électroménager de préparation culinaire destiné à être tenu à la main**
Arbeitsfuß für Motorengehäuse eines Elektrogeräts zur Speisenzubereitung, das für den Handbetrieb konzipiert ist
Working stand for a motor housing of a household cooking appliance intended for being handheld

(30) Priorité: 23.12.2009 FR 0906321
(43) Date de publication de la demande: 29.06.2011
(73) Titulaire: SEB S.A., 69130 Ecully (FR)
(72) Inventeur: Lebrun, Erik, 65420 Ibos (FR); Holtzmann, Violaine, 75017 Paris (FR); Rouches, Alexandre, 65310 Horgues (FR); Lecerf, Joël, 50190 Périers (FR)
(74) Mandataire: Bourrières, Patrice

(56) Documents cités:
- DE-A1- 1 429 174
- FR-A1- 2 891 449
- US-A- 4 169 681

## Description

La présente invention concerne le domaine technique général des appareils électroménagers de préparation culinaire destinés à être tenus à la main et se rapporte plus particulièrement à un pied de travail destiné être accouplé à un boîtier moteur, notamment du type utilisé pour les mixeurs plongeants, pour permettre la réalisation d'autres préparations que le mixage.

Il est connu de la demande de brevet FR 1 437 573 un appareil électroménager de préparation culinaire comportant un boitier moteur pouvant être accouplé à un pied de mixage muni d'un outil coupant rotatif pour la préparation de potages. Ce document divulgue également la possibilité d'utiliser le boitier moteur pour entraîner en rotation d'autres types d'outils, tel un outil presse-purée. Un tel appareil présente donc l'avantage d'une grande polyvalence d'utilisation, le boitier moteur de l'appareil pouvant être utilisé avec différents types de pied de travail en fonction de la préparation à réaliser.

Il est également connu de la demande de brevet FR 2 891 449, déposée par la demanderesse, un pied de travail, de type pied de mixage, recevant un outil amovible, l'outil étant associé à une cloche de préhension de sorte que l'outil peut être très facilement changé. Cet appareil présente l'avantage de pouvoir être proposé avec une gamme d'accessoires, constituée par exemple d'outils de différentes formes, que l'utilisateur peut très facilement monter en fonction de la préparation à réaliser.

De tels pieds de travail, destinés à être utilisés avec un boitier moteur de mixeur plongeant, présentent cependant l'inconvénient de ne pas permettre la réalisation de certaines préparations, notamment parce qu'ils imposent d'utiliser un outil de travail rotatif. De plus, l'utilisation d'un outil rotatif pour la réalisation de préparations telles que de la purée présente l'inconvénient d'aboutir à une purée ne convenant pas à certains consommateurs. A titre d'exemple, l'utilisation d'un sabre tournant contre une grille perforée provoque un cisaillement excessif et un échauffement des aliments qui dénaturent le sucre lent de la pomme de terre en cassant les grains d'amidon. Ceci a pour effet de rendre la purée élastique et collante.

L'invention qui suit vise à pallier ces inconvénients en proposant un nouveau type de pied de travail pour boitier moteur de mixeur plongeant permettant l'utilisation d'outils de travail destinés à travailler selon un mouvement de translation.

Le but de l'invention est atteint par un pied de travail pour boitier moteur d'appareil électroménager de préparation culinaire destiné à être tenu à la main, le pied de travail comprenant un arbre d'entraînement prévu pour être entraîné en rotation par un moteur et comportant un outil de travail relié audit arbre d'entraînement par des moyens de transmission, caractérisé en ce que les moyens de transmission transforment le mouvement rotatif de l'arbre d'entraînement en un mouvement de translation de l'outil de travail perpendiculairement à la direction longitudinale du pied de travail et/ou en un mouvement pendulaire de l'outil de travail.

Une telle caractéristique permet d'obtenir un mouvement favorisant le rendement de l'outil de travail, notamment dans le cas d'un outil presse-purée, sans générer trop d'à-coups dans le boitier moteur pour une meilleure ergonomie d'utilisation.

Selon une autre caractéristique de l'invention, le pied de travail s'étend longitudinalement entre une extrémité destinée à être raccordée au boitier moteur et une extrémité destinée à supporter l'outil de travail, et l'arbre d'entraînement s'étend axialement à la direction longitudinale du pied de travail.

Selon une autre caractéristique de l'invention, l'outil de travail est une grille pour réaliser des purées ou une grille de découpe des aliments.

Selon une autre caractéristique de l'invention, l'outil de travail est déplacé en translation sur une course comprise entre 1 à 4 mm.

Selon une autre caractéristique de l'invention, les moyens de transmission transforment le mouvement rotatif de l'arbre d'entraînement en un mouvement de translation rectiligne de l'outil de travail perpendiculairement à l'arbre d'entraînement.

Selon une autre caractéristique de l'invention, l'outil de travail est mobile en translation dans des glissières portées par le pied de travail.

Selon encore une autre caractéristique de l'invention, les moyens de transmission comportent un excentrique entraîné en rotation par l'arbre d'entraînement, l'excentrique comprenant une tête cylindrique s'engageant dans un trou oblong d'un entraîneur solidaire de l'outil de travail, le trou oblong s'étendant perpendiculairement à la direction de translation de l'outil de travail.

Selon encore une autre caractéristique de l'invention, l'arbre d'entraînement est guidé par un palier disposé à proximité de l'excentrique.

Selon encore une autre caractéristique de l'invention, les moyens de transmission transforment le mouvement rotatif de l'arbre d'entraînement en un mouvement de translation circulaire et/ou pendulaire de l'outil de travail.

Selon encore une autre caractéristique de l'invention, le pied de travail comporte une partie supérieure destinée à être fixée rigidement au boitier moteur et une partie inférieure, supportant l'outil de travail, mobile par rapport à la partie supérieure, l'arbre d'entraînement traversant la partie supérieure et comportant une extrémité inférieure débouchant dans un logement de la partie inférieure.

Selon encore une autre caractéristique de l'invention, l'extrémité inférieure de l'arbre d'entraînement comporte un excentrique entraîné en rotation par l'arbre d'entraînement, l'excentrique comportant une tête cylindrique s'engageant dans un palier fixé sur la partie inférieure du pied de travail.

Selon encore une autre caractéristique de l'invention, la partie supérieure comporte un fût de guidage de l'arbre d'entraînement, la partie inférieure comportant un corps entourant le fût de guidage et comprenant une extrémité inférieure supportant le palier.

Selon encore une autre caractéristique de l'invention, le pied de travail est monté de manière amovible sur le boitier moteur.

L'invention concerne également un appareil électroménager de préparation culinaire comportant un boitier moteur comprenant un entraîneur rotatif et un pied de travail muni d'un arbre d'entraînement solidaire en rotation de l'entraîneur rotatif, caractérisé en ce que le pied de travail est tel que précédemment décrit.

Selon une autre caractéristique de l'invention, l'appareil électroménager de préparation culinaire comporte également un pied de mixage muni d'un outil coupant rotatif.

On comprendra mieux les buts, aspects et avantages de la présente invention, d'après la description donnée ci-après de plusieurs modes particuliers de réalisation de l'invention, présentés à titre d'exemples non limitatifs, en se référant aux dessins annexés dans lesquels :
- la figure 1 est une vue en perspective d'un boitier moteur d'appareil électroménager pouvant être équipé d'un pied de travail selon l'invention ;
- la figure 2 est une vue en perspective d'un pied de travail selon un premier mode de réalisation de l'invention ;
- la figure 3 est une vue en perspective du dispositif presse-purée amovible équipant le pied de travail de la figure 2 ;
- la figure 4 est une vue en coupe longitudinale du dispositif presse-purée de la figure 3 ;
- les figures 5 et 6 sont des vues en perspective éclatées du dispositif presse-purée de la figure 3 ;
- la figure 7 est une vue en perspective d'un pied de travail selon un deuxième mode de réalisation ;
- la figure 8 est une vue en perspective éclatée du pied de travail de la figure 7 ;
- la figure 9 est une vue en coupe longitudinale du pied de travail de la figure 7 ;
- la figure 10 est une vue en perspective d'un appareil électroménager de préparation culinaire équipé d'un pied de travail selon un troisième mode de réalisation de l'invention ;
- la figure 11 est une vue en coupe longitudinale du pied de travail équipant l'appareil de la figure 10 ;
- la figure 12 est une vue en perspective, partiellement arrachée, du pied de travail de la figure 10 ;
- la figure 13 est une vue en perspective éclatée du pied de travail de la figure 10.

Seuls les éléments nécessaires à la compréhension de l'invention ont été représentés. Pour faciliter la lecture des dessins, les mêmes éléments portent les mêmes références d'une figure à l'autre.

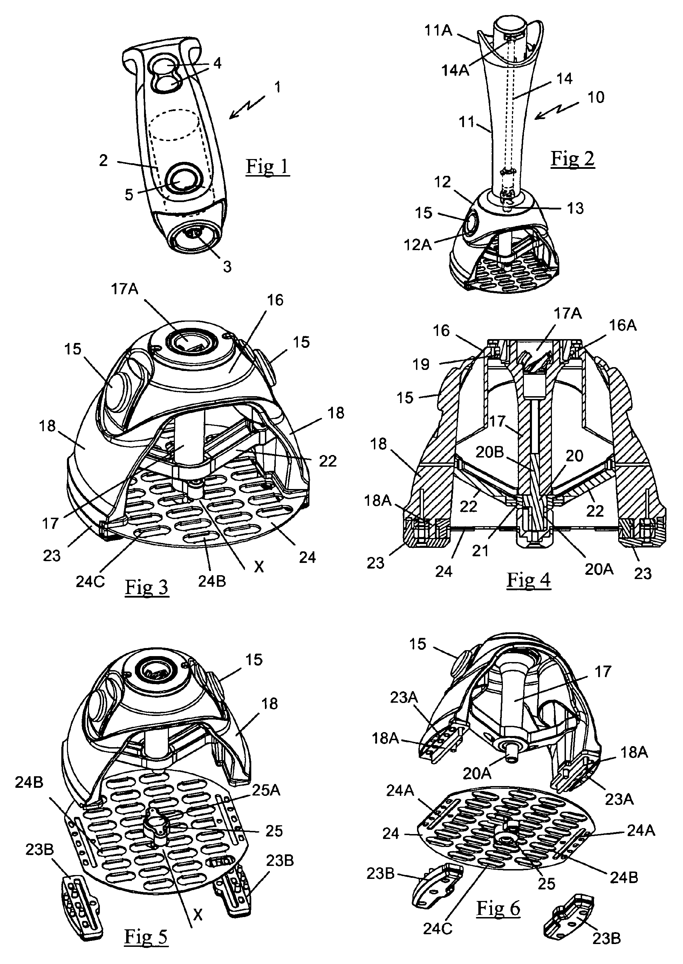

La figure 1 représente un boitier moteur 1 de mixeur ménager renfermant un moteur 2, représenté schématiquement en pointillé sur la figure, agencé selon l'axe longitudinal du boîtier moteur 1 et possédant un arbre de sortie muni d'un entraîneur rotatif 3 faisant saillie à une extrémité du boîtier moteur 1. De manière connue en soi, le boitier moteur 1 comporte des boutons poussoir 4 disposés dans la partie supérieure du boitier moteur 1 permettant de commander le fonctionnement du moteur 2 et comprend un bouton de déverrouillage 5, disposé à proximité de l'extrémité inférieure du boitier moteur 1, sur lequel l'utilisateur peut presser pour désaccoupler un pied de travail 10, tel qu'illustré à la figure 2, apte à être associé avec le boitier moteur 1.

Le pied de travail 10, représenté isolément sur la figure 2, comporte un fût tubulaire 11, réalisé avantageusement en acier inox ou en matière plastique, comprenant une extrémité supérieure d'accouplement 11A assurant le montage du pied de travail 10 sur le boîtier 1.

Le fût tubulaire 11 comporte une extrémité inférieure se prolongeant par une cloche 12 de connexion au centre de laquelle débouche un entraîneur 13 entraîné en rotation par une tige 14, représentés en pointillé sur la figure 2, la tige 14 s'étendant à l'intérieur du fût tubulaire 11 et comprenant une extrémité supérieure 14A venant s'accoupler avec l'entraîneur rotatif 3 du boîtier moteur 1.

La cloche 12 comporte deux ouvertures latérales 12A dans lesquelles viennent s'insérer élastiquement deux boutons 15 portés par un dispositif presse-purée amovible, représenté isolément sur la figure 3, le dispositif presse-purée comportant un dôme 16 de forme complémentaire venant s'engager sous la cloche 12 de sorte qu'il se trouve accouplé de manière amovible sur la cloche 12 en étant maintenu en position par l'insertion des boutons 15 dans les ouvertures 12A de la cloche.

Conformément à la figure 4, le dôme 16 du dispositif presse-purée comporte un sommet muni d'une ouverture centrale 16A recevant un arbre d'entraînement 17 s'étendant axialement entre deux arches latérales 18 venant dans le prolongement du dôme 16, l'arbre d'entraînement 17 comportant une extrémité supérieure présentant une empreinte 17A de forme complémentaire de celle de l'entraîneur 13 de manière à ce que l'arbre d'entraînement 17 soit solidaire en rotation de la tige 14 lorsque le dispositif presse-purée est accouplé à la cloche 12.

De manière préférentielle, l'arbre d'entraînement 17 est guidé au niveau de l'ouverture 16A par un premier palier 19 et comporte une extrémité inférieure qui est reliée à un excentrique 20, ce dernier étant guidé par un deuxième palier 21 porté par deux bras de maintien 22 s'étendant entre les deux arches latérales 18 du dispositif presse-purée. L'excentrique 20 comporte une tête cylindrique 20A qui fait saillie à l'extrémité inférieure de l'arbre d'entraînement 17 et qui est préférentiellement excentrée d'une distance de l'ordre de 1 à 2 mm par rapport à l'arbre d'entraînement 17, l'excentrique 20 comportant un pion 20B de section rectangulaire inséré dans un orifice central de forme complémentaire de l'arbre d'entraînement 17 de sorte que l'excentrique 20 est solidaire en rotation de l'arbre d'entraînement 17.

Conformément aux figures 4 à 6, les extrémités inférieures des arches latérales 18 comportent des patins 23 supportant un outil de travail constitué par une grille 24 plane mobile en translation selon une direction perpendiculaire à l'arbre d'entraînement 17, les patins 23 étant avantageusement réalisés dans un matériau favorisant la glisse, tel que du PTFE.

De manière préférentielle, chaque patin 23 est réalisé en deux parties et comprend une partie supérieure 23A comportant une fente dans laquelle vient s'engager une nervure 18A faisant saillie à l'extrémité inférieure de l'arche 18, la nervure 18A traversant une fente 24A réalisée en bordure de la grille 24 et s'engageant dans une rainure portée par une partie inférieure 23B du patin 23.

De cette manière, la nervure 18A forme une glissière guidant la grille 24 en translation selon un axe X, la fente 24A de la grille présentant une longueur supérieure de l'ordre de 2 à 4 mm par rapport à la longueur de la nervure 18A pour permettre un débattement de la grille 24.

La partie inférieure 23B des patins présente avantageusement une hauteur de l'ordre de 2 mm s'étendant sous la grille 24 de manière à former un talon sur lequel peut reposer le dispositif presse-purée.

La grille 24 est ajourée par des perforations 24B et comporte un entraîneur central 25 comprenant un trou oblong 25A dans lequel vient s'introduire la tête cylindrique 20A de l'excentrique. Le trou oblong 25A s'étend perpendiculairement à la direction X de translation de la grille 24 et présente une largeur correspondant au diamètre de la tête cylindrique 20A et une longueur plus longue d'au moins 2 fois la distance d'excentration de la tête cylindrique 20A de manière à ce que la grille 24 fasse un aller retour, en translation rectiligne selon l'axe X, lors de la rotation de l'arbre d'entraînement 17 sur un tour.

A titre d'exemple, la grille 24 est en acier inoxydable d'épaisseur 1 mm et comporte des perforations 24B oblongues d'une longueur de 10 mm et d'une largeur de 5 mm s'étendant perpendiculairement à l'axe X de translation de la grille 24.

Bien entendu, plusieurs formes et différents nombres de perforations 24B sont envisageables, chaque perforation 24B pouvant avantageusement présenter une arrête 24C faisant saillie sur la face inférieure de la grille 24 qui est orientée frontalement pour agir comme un rabot sur les aliments, la forme du bord d'attaque de l'arrête 24C pouvant être droite, dentelée ou ondulée.

De manière préférentielle, la largeur des perforations 24B est supérieure au double du débattement de la grille 24 lors de la rotation de l'arbre d'entraînement 17 de manière à ce qu'il résulte un trou apparent, non balayé par l'arête 24C de la perforation 24B, laissant un espace suffisant pour que l'aliment traité, tel que la pomme de terre, puisse traverser les perforations 24B de la grille 24 sans dégradation de l'amidon par cisaillement.

Le pied de travail 10 ainsi réalisé présente l'avantage de transformer le mouvement rotatif de l'entraîneur 3 du boitier moteur 1, dont la vitesse peut habituellement varier de 6000 tr/min à 21000 tr/min, en un mouvement de translation rectiligne de la grille 24 selon un mouvement de va-et-vient, à une fréquence de 100 Hz à 350Hz.

Un tel pied de travail 10 permet donc la réalisation de purée de pomme de terre en venant presser le tubercule au moyen de la grille 24 entraînée dans un mouvement vibratoire par le boitier moteur 1, ce qui permet d'assurer le délitement de la pomme de terre sans dissocier l'amidon, ni dégrader les arômes et les saveurs du tubercule, et d'obtenir une purée présentant une bonne texture.

De plus, l'utilisation d'un tel pied de travail 10, dans lequel la grille 24 presse-purée est entraînée en translation, présente l'avantage de nécessiter moins d'effort de la part de l'utilisateur pour écraser les pommes de terre qu'un presse-purée manuel de l'art antérieur dans lequel l'utilisateur doit écraser les pommes de terre au moyen d'une grille perforée simplement fixée à un manche, sans génération de vibrations.

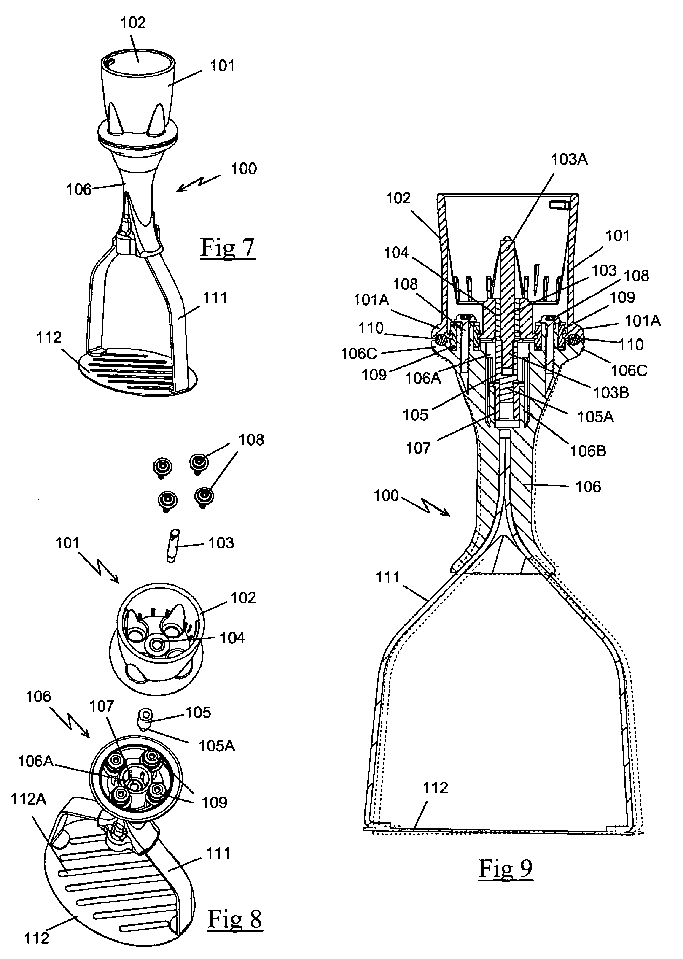

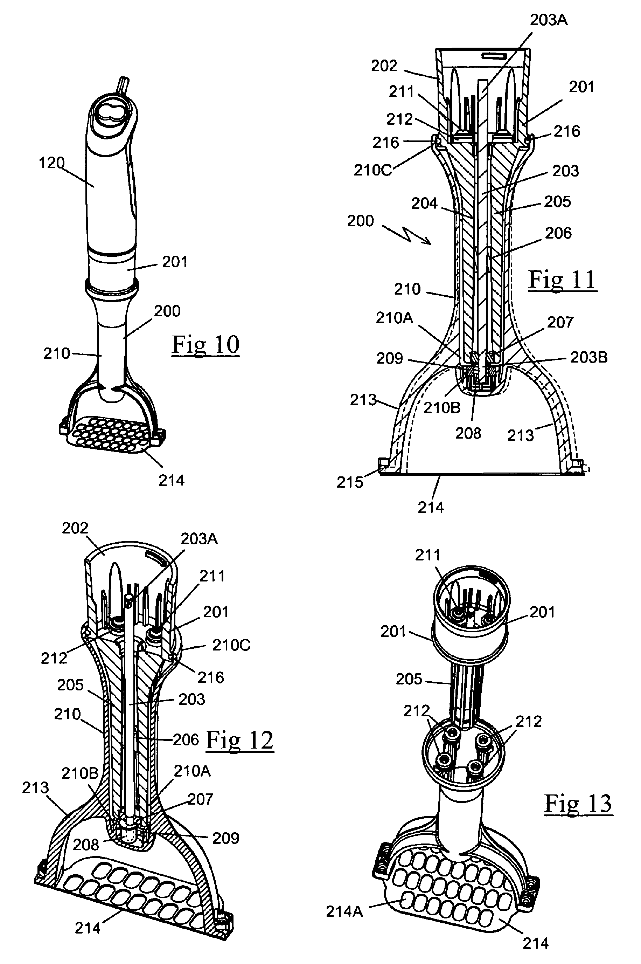

Les figures 7 à 9 illustrent un deuxième mode de réalisation d'un pied de travail 100 selon l'invention. Conformément à ces figures, le pied de travail 100 comporte une partie supérieure 101 comprenant un manchon d'accouplement 102 permettant son montage sur un boitier moteur 120, tel qu'illustré sur la figure 10 en association avec un autre pied de travail 200, et dont la conception est bien connue de l'homme du métier.

Comme on peut le voir sur les figures 8 et 9, le manchon d'accouplement 102 comprend un fond au centre duquel fait saillie un arbre d'entraînement 103 dont l'extrémité supérieure 103A est destinée à venir s'accoupler avec un entraîneur rotatif du boitier moteur lorsque le pied de travail 100 est fixé sur le boiter moteur.

L'arbre d'entraînement 103 traverse le fond du manchon 102 au niveau d'un premier palier 104 de guidage et comporte une extrémité inférieure 103B qui est emmanchée en force dans un orifice d'un excentrique 105, de sorte que l'excentrique 105 est solidaire en rotation de l'arbre d'entraînement 103.

L'excentrique 105 est disposé dans un logement 106A d'une partie inférieure 106 du pied de travail 100 et comporte une tête cylindrique 105A qui est avantageusement excentrée de 0.3 mm par rapport à l'arbre d'entraînement 103, la tête cylindrique 105A étant engagée dans un deuxième palier 107 porté par un manchon de fixation 106B s'étendant au fond du logement 106A.

La partie inférieure 106 comporte un corps qui est fixé sur la partie supérieure 101 du pied de travail par quatre vis 108, avec interposition de silentblocs 109 préférentiellement constitués par des bagues en caoutchouc, de sorte que le corps de la partie inférieure 106 est fixé souplement sur la partie supérieure 101. De manière préférentielle, le corps de la partie inférieure 106 comporte une collerette périphérique 106C circulaire venant en vis-à-vis d'une collerette périphérique 101A circulaire portée par la partie supérieure 101, en prenant en sandwich un joint torique 110 de manière à assurer l'étanchéité de la liaison souple entre la partie inférieure 106 et la partie supérieure 101, et éviter que des aliments ne puissent s'introduire à l'intérieur du logement 106A.

La partie inférieure 106 du pied de travail 100 comporte un cadre comprenant deux branches 111 s'étendant depuis le corps jusqu'à une grille 112 plane perforée de forme ovale, la grille 112 étant avantageusement soudée à l'extrémité des branches 111.

A titre d'exemple, la grille 112 perforée est réalisée à partir d'une plaque d'acier inoxydable d'épaisseur 1 mm et présente une longueur de 10 cm et une largeur de 7 cm, la grille comportant des perforations 112A présentant la forme de fentes obliques d'une largeur de l'ordre de 4 mm s'étendant sur une longueur variant de 30 à 60 mm en fonction de leur position sur la grille 112.

Le pied de travail 100 ainsi réalisé présente l'avantage de générer un mouvement vibratoire de la grille 112 lors de l'entraînement en rotation de l'arbre d'entraînement 103 par le boitier moteur. En effet, la rotation de l'arbre d'entraînement 103 entraîne la rotation de la tête cylindrique 105A selon une trajectoire circulaire autour de l'axe longitudinal de l'arbre d'entraînement 103, de sorte que la partie inférieure 106 du pied de travail, et donc la grille 112, est déplacée selon un mouvement de translation circulaire autour de l'axe longitudinal du pied de travail 100, le déplacement du pied de travail 100, lorsque l'excentrique 105 a fait un demi-tour, étant représenté schématiquement en pointillé sur la figure 9. La grille 112 peut également légèrement pivoter autour des silentblocs 109 lors de cette translation circulaire du fait du couple de pivotement généré par l'excentrique 105 au niveau des silentblocs 109 de sorte que la grille 112 peut également se déplacer selon un mouvement pendulaire.

Un tel mode de réalisation présente l'avantage de permettre la réalisation de purée de pomme de terre sans dégrader l'amidon et en conservant les arômes et les saveurs du tubercule. De plus, l'utilisation d'un tel pied de travail dans lequel la grille presse-purée est entraînée en translation présente l'avantage de nécessiter peu d'effort de la part de l'utilisateur pour écraser les pommes de terre.

Enfin, le pied de travail 100 selon ce deuxième mode de réalisation présente l'avantage d'être très facile à nettoyer, les parties mobiles étant encapsulées à l'intérieur du pied de travail.

Les figures 10 à 13 représentent un troisième mode de réalisation d'un pied de travail 200 selon l'invention destiné à être accouplé au boitier moteur 120.

Conformément aux figures 11 à 13, le pied de travail 200 comporte une partie supérieure 201 munie d'un manchon 202 d'accouplement permettant son assemblage avec le boitier moteur 120, le manchon 202 comprenant un fond au centre duquel fait saillie un arbre d'entraînement 203 dont l'extrémité supérieure 203A est destinée à venir s'accoupler avec un entraîneur rotatif du boitier moteur 120 pour être rendue solidaire en rotation de ce dernier.

L'arbre d'entraînement 203 pénètre au travers d'une ouverture disposée dans le fond du manchon 202 puis passe au travers d'un tunnel de passage 204 s'étendant à l'intérieur d'un fût 205 présentant une longueur de l'ordre de 10 cm, le tunnel de passage 204 recevant un palier intermédiaire 206 ainsi qu'un palier d'extrémité 207 assurant le guidage de l'arbre d'entraînement 203. L'arbre d'entraînement 203 comporte une extrémité inférieure 203B, faisant saillie à l'extrémité du fût 205, sur laquelle est fixé un excentrique 208 s'étendant dans un logement 210A d'une partie inférieure 210 du pied de travail 200. De manière préférentielle, l'excentrique 208 présente la forme d'une tête cylindrique qui est excentrée de l'ordre de 0,8 mm par rapport à l'arbre d'entraînement 203, l'excentrique 208 étant inséré dans un palier 209 porté par un manchon de fixation 210B s'étendant au fond du logement 210A.

La partie inférieure 210 du pied de travail comporte un corps cylindrique enveloppant le fût 205 qui est fixé sur la partie supérieure 201 par des vis 211, avec interposition de silentblocs 212 en caoutchouc, de sorte que la partie inférieure 210 est fixée souplement sur la partie supérieure 201, autorisant ainsi un certain déplacement de la partie inférieure 210 par rapport à la partie supérieure 201.

Le corps cylindrique comprend une extrémité supérieure évasée munie d'une partie annulaire 210C entourant la base du manchon 202, avec interposition d'un joint torique 216 assurant l'étanchéité de la liaison souple entre la partie inférieure 210 et la partie supérieure 201 afin d'éviter que des aliments ne puissent s'introduire à l'intérieur du logement 210A.

Le corps cylindrique de la partie inférieure 210 comporte une extrémité inférieure fermée supportant le palier 209 de guidage de l'excentrique 208, cette extrémité inférieure s'étendant entre deux branches latérales 213 de maintien d'une grille 214 plane perforée. Les deux branches 213 présentent une forme arquée depuis le corps cylindrique jusqu'à une extrémité inférieure munie de brides 215 de fixation de la grille 214, la grille 214 étant avantageusement fixée de manière amovible sur les brides 215, par exemple au moyen de vis, de sorte que la grille 214 peut être aisément démontée du pied de travail 200, soit pour son nettoyage, soit pour pouvoir utiliser différents types de grilles présentant par exemple différentes formes de perforations en fonction de la préparation à réaliser et des aliments à traiter.

Dans l'exemple illustré aux figures 10 à 13, la grille 214 perforée est réalisée dans une plaque d'acier inoxydable présentant une largeur de l'ordre de 7 cm et une longueur de l'ordre de 9 cm, et comporte trente deux perforations 214A oblongues présentant une largeur de 8 mm et une longueur de 15 mm.

De manière préférentielle, les branches 213 présentent une hauteur limitée de manière à ce que l'excentrique 208 soit peu éloigné de la grille 214 et que les mouvements en translation générés par l'excentrique 208 se trouvent au plus près de la grille 214. A titre d'exemple, les branches 213 sont reliées au corps cylindrique à proximité du palier 209 recevant l'excentrique 208 et présentent une hauteur adaptée pour que l'excentrique 208 se trouve à moins de 10 cm de la grille 214.

On obtient ainsi un pied de travail 200 présentant un grand confort d'utilisation, permettant de réduire notablement l'effort pour écraser les aliments en purée grâce au déplacement latéral de la grille lors de l'entraînement en rotation par le boitier moteur. En effet, la rotation de l'arbre d'entraînement 203 entraîne la rotation de la tête cylindrique 208 et donc le déplacement en translation de la partie inférieure 210 du pied de travail selon une trajectoire circulaire autour de l'axe longitudinal de l'arbre d'entraînement 203 de sorte que la grille 214 est animée d'un mouvement proche d'un mouvement de translation circulaire autour de l'axe longitudinal de l'arbre d'entraînement 203, le déplacement de la partie inférieure 210 du pied de travail 200, lorsque l'excentrique 208 a fait un demi-tour, étant représenté schématiquement en pointillé sur la figure 11. La grille 214 pivote également légèrement autour des silentblocs 212 lors de la rotation de l'excentrique 208 du fait du couple de pivotement généré par ce dernier de sorte que la grille 214 se déplace également selon un mouvement de translation pendulaire.

Le pied de travail selon ce troisième mode de réalisation présente l'avantage d'être facile à nettoyer, grâce à l'encapsulage de l'excentrique à l'intérieur du pied de travail, et de générer peu de vibrations dans le boitier moteur, étant donné que l'excentrique est disposé au plus près de la grille.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention non représentée, la grille du pied de travail pourra être animée d'un mouvement uniquement en translation pendulaire.

Ainsi, dans une variante de réalisation non représentée, la grille pourra être animée d'un mouvement de translation axiale au boitier moteur, par exemple en utilisant au moyen d'un renvoi d'angle par engrenage conique pour faire tourner l'excentrique perpendiculairement à l'axe de l'entraîneur du boitier moteur. Un tel pied de travail comprenant une grille animée selon un mouvement de translation axiale pourra par exemple être utilisé avec une grille constituée d'un assemblage de lames de découpe pour réaliser des frites ou des dés sans effort.

Ainsi dans une autre variante de réalisation non représentée, le système d'excentrique pour transformer le mouvement de rotation en un mouvement de translation pourra être remplacé par tout autre dispositif réalisant la même fonction. A titre d'exemple, le dispositif pour la transformation de mouvement pourra être constitué par une roue entraînée en rotation par un arbre d'entraînement relié à l'entraîneur du boitier moteur, la roue comprenant une bande périphérique munie d'une rainure cheminant selon une sinusoïde dans laquelle viendra s'engager un doigt d'entraînement relié à la partie inférieure du pied de travail supportant la grille.

## Revendications

1. Pied de travail (10; 100; 200) pour boitier moteur (1; 120) d'appareil électroménager de préparation culinaire destiné à être tenu à la main, ledit pied de travail (10; 100; 200) comprenant un arbre d'entraînement (17; 103; 203) prévu pour être entraîné en rotation par un moteur (2) et comportant un outil de travail (24; 112; 214) relié audit arbre d'entraînement (17; 103; 203) par des moyens de transmission, **caractérisé en ce que** lesdits moyens de transmission transforment le mouvement rotatif de l'arbre d'entraînement (17; 103; 203) en un mouvement de translation de l'outil de travail (24; 112; 214) perpendiculairement à la direction longitudinale du pied de travail et/ou en un mouvement pendulaire de l'outil de travail (112; 214).

2. Pied de travail (10; 100; 200) selon la revendication 1, **caractérisé en ce que** le pied de travail s'étend longitudinalement entre une extrémité destinée à être raccordée au boitier moteur (1; 120) et une extrémité destinée à supporter l'outil de travail (24; 112; 214), et **en ce que** l'arbre d'entraînement (17; 103; 203) s'étend axialement à la direction longitudinale du pied de travail (10; 100; 200).

3. Pied de travail (10; 100; 200) selon l'une quelconque des revendications 1 à 2, **caractérisé en ce que** ledit outil de travail (24; 112; 214) est une grille pour réaliser des purées ou une grille de découpe des aliments.

4. Pied de travail (10; 100; 200) selon l'une quelconque des revendications 1 à 3, **caractérisé en ce que** ledit outil de travail (24; 112; 214) est déplacé en translation sur une course comprise entre 1 à 4 mm.

5. Pied de travail (10) selon l'une quelconque des revendications 1 à 4, **caractérisé en ce que** les moyens de transmission transforment le mouvement rotatif de l'arbre d'entraînement (17) en un mouvement de translation rectiligne de l'outil de travail (24).

6. Pied de travail (10) selon la revendication 5, **caractérisé en ce que** ledit outil de travail (24) est mobile en translation dans des glissières (18A) portées par le pied de travail (10).

7. Pied de travail (10) selon la revendication 6, **caractérisé en ce que** les moyens de transmission comportent un excentrique (20) entraîné en rotation par l'arbre d'entraînement (17), ledit excentrique (20) comprenant une tête cylindrique (20A) s'engageant dans un trou oblong (25A) d'un entraîneur (25) solidaire de l'outil de travail (24), ledit trou oblong (25A) s'étendant perpendiculairement à la direction de translation de l'outil de travail (24).

8. Pied de travail (10) selon la revendication 7, **caractérisé en ce que** l'arbre d'entraînement (17) est guidé par un palier (21) disposé à proximité de l'excentrique (20).

9. Pied de travail (100; 200) selon l'une quelconque des revendications 1 à 4, **caractérisé en ce que** les moyens de transmission transforment le mouvement rotatif de l'arbre d'entraînement (103; 203) en un mouvement de translation circulaire et/ou pendulaire de l'outil de travail (112; 214).

10. Pied de travail (100; 200) selon la revendication 9, **caractérisé en ce qu'**il comporte une partie supérieure (101; 201) destinée à être fixée rigidement au boitier moteur (120) et une partie inférieure (106; 210) mobile par rapport à la partie supérieure (101; 201), ladite partie inférieure (106; 210) supportant ledit outil de travail (112; 214) et **en ce que** ledit arbre d'entraînement (103; 203) traverse la partie supérieure (101; 201) et comporte une extrémité inférieure (103B; 203B) débouchant dans un logement (1 06A; 210A) de la partie inférieure (106; 210).

11. Pied de travail (100; 200) selon la revendication 10, **caractérisé en ce que** ladite extrémité inférieure (103B; 203B) de l'arbre d'entraînement (103; 203) comporte un excentrique (105; 208) entraîné en rotation par l'arbre d'entraînement (103; 203), ledit excentrique (105; 208) comportant une tête cylindrique s'engageant dans un palier (107, 209) fixé sur la partie inférieure (106; 210) du pied de travail.

12. Pied de travail (200) selon la revendication 11, **caractérisé en ce que** la partie supérieure (201) comporte un fût de guidage (205) de l'arbre d'entraînement (203) et **en ce que** ladite partie inférieure (210) comporte un corps entourant ledit fût de guidage (205), ledit corps comprenant une extrémité inférieure supportant ledit palier (209).

13. Pied de travail (10; 100; 200) selon l'une quelconque des revendications 1 à 12, **caractérisé en ce qu'**il est monté de manière amovible sur le boitier moteur (1; 120).

14. Appareil électroménager de préparation culinaire comportant un boitier moteur (1; 120) comprenant un entraîneur rotatif (3) et un pied de travail (10; 100; 200) muni d'un arbre d'entraînement (17; 103; 203) solidaire en rotation dudit entraîneur rotatif, **caractérisé en ce que** ledit pied de travail est conforme à l'une des revendications 1 à 13.

15. Appareil électroménager de préparation culinaire selon la revendication 14, **caractérisé en ce qu'**il comporte également un pied de mixage muni d'un outil coupant rotatif.

## Claims

1. A working foot (10; 100; 200) for a motor housing (1; 120) of a household electrical appliance for preparing food intended to be hand-held, said working foot (10; 100; 200) comprising a drive shaft (17; 103; 203) designed to be driven in rotation by a motor (2) and including a working tool (24; 112; 214) connected to said drive shaft (17; 103; 203) by transmission means, **characterised in** the said transmission means transforms the rotary movement of the drive shaft (17; 103; 203) into a translation movement of the working tool (24; 112; 214) perpendicular to the longitudinal direction of the working foot and/or into a pendular movement of the working tool (112; 214).

2. A working foot (10; 100; 200) according to claim 1, **characterised in that** the working foot extends longitudinally between an end intended to be connected to the motor housing (1; 120) and an end intended to support the working tool (24; 112; 214), and **in that** the drive shaft (17; 103; 203) extends axially to the longitudinal direction of the working foot (10; 100; 200).

3. A working foot (10; 100; 200) according to any one of claims 1 to 2, **characterised in that** said working tool (24; 112; 214) is a grid for making purees or a grid for cutting food.

4. A working foot (10; 100; 200) according to any one of claims 1 to 3, **characterised in that** said working tool (24; 112; 214) is displaced in translation over a stroke ranging between 1 and 4 mm.

5. A working foot (10) according to any one of claims 1 to 4, **characterised in that** the transmission means transforms the rotary movement of the drive shaft (17) into a rectilinear translation movement of the working tool (24).

6. A working foot (10) according to claim 5, **characterised in that** said working tool (24) moves in translation in slides (18A) carried by the working foot (10).

7. A working foot (10) according to claim 6, **characterised in that** the transmission means contains an eccentric (20) driven in rotation by the drive shaft (17), said eccentric (20) having a cylindrical head (20A) engaged in an oblong hole (25A) of a driver (25) integral with the working tool (24), said oblong hole (25A) extending perpendicular to the direction of translation of the working tool (24).

8. A working foot (10) according to claim 7, **characterised in that** the drive shaft (17) is guided by a bearing (21) arranged in proximity to the eccentric (20).

9. A working foot (100; 200) according to any one of claims 1 to 4, **characterised in that** the transmission means transforms the rotary movement of the drive shaft (103; 203) into a circular and/or pendular translation movement of the working tool (112; 214).

10. A working foot (100; 200) according to claim 9, **characterised in that** it includes an upper portion (101; 201) intended to be rigidly fixed to the motor housing (120) and a lower portion (106; 210) that moves with respect to the upper portion (101; 201), said lower portion (106; 210) supporting said working tool (112; 214) and **in that** said drive shaft (103; 203) passes through the upper portion (101; 201) and has a lower end (103B; 203B) opening into a slot (106A; 210A) in the lower portion (106; 210).

11. A working foot (100; 200) according to claim 10, **characterised in that** said lower end (103B; 203B) of the drive shaft (103; 203) contains an eccentric (105; 208) driven in rotation by the drive shaft (103; 203), said eccentric (105; 208) having a cylindrical head engaged in a bearing (107, 209) fixed on the lower portion (106; 210) of the working foot.

12. A working foot (200) according to claim 11, **characterised in that** the upper portion (201) has a guide shank (205) for guiding the drive shaft (203) and **in that** the lower portion (210) has a body surrounding said guide shank (205), said body having a lower end supporting said bearing (209).

13. A working foot (10; 100; 200) according to any one of claims 1 to 12, **characterised in that** it is removably mounted on the motor housing (1; 120).

14. A household electrical appliance for preparing food comprising a motor housing (1; 120) having a rotary drive (3) and a working foot (10; 100; 200) fitted with a drive shaft (17; 103; 203) integral in rotation with said rotary drive, **characterised in that** said working foot conforms to one of claims 1 to 13.

15. A household electrical appliance for preparing food according to claim 14, **characterised in that** it also has a blender foot fitted with a rotary cutting tool.

## Patentansprüche

1. Arbeitsstab (10; 100; 200) für ein Motorgehäuse (1; 120) eines Elektrohaushaltsgerätes für kulinarische Zubereitungen, das dafür vorgesehen ist, in der Hand gehalten zu werden, wobei der Arbeitsstab (10; 100; 200) eine Antriebswelle (17; 103; 203), die dafür vorgesehen ist, von einem Motor (2) in Drehung versetzt zu werden, und ein Arbeitswerkzeug (24; 112; 214) umfasst, das mit der Antriebswelle (17; 103; 203) mithilfe von Übertragungsmitteln verbunden ist, **dadurch gekennzeichnet, dass** die Übertragungsmittel die Drehbewegung der Antriebswelle (17; 103; 203) in eine Schiebebewegung des Arbeitswerkzeuges (24; 112; 214), die senkrecht zur Längsrichtung des Arbeitsstabes verläuft, und/oder in eine Pendelbewegung des Arbeitswerkzeuges (112; 214) umwandeln.

2. Arbeitsstab (10; 100; 200) nach Anspruch 1, **dadurch gekennzeichnet, dass** sich der Arbeitsstab längs zwischen einem Ende, das für den Anschluss an das Motorgehäuse (1; 120) bestimmt ist, und einem Ende erstreckt, das zum Tragen des Arbeitswerkzeuges (24; 112; 214) bestimmt ist, und dadurch, dass sich die Antriebswelle (17; 103; 203) axial zur Längsrichtung des Arbeitsstabes (10; 100; 200) erstreckt.

3. Arbeitsstab (10; 100; 200) nach einem der Ansprüche 1 bis 2, **dadurch gekennzeichnet, dass** das Arbeitswerkzeug (24; 112; 214) ein Gitter für die Zubereitung von Pürees oder ein Gitter zum Schneiden von Lebensmitteln ist.

4. Arbeitsstab (10; 100; 200) nach einem der Ansprüche 1 bis 3, **dadurch gekennzeichnet, dass** das Arbeitswerkzeug (24; 112; 214) über eine Strecke, die zwischen 1 bis 4 mm beträgt, hin und her geschoben wird.

5. Arbeitsstab (10) nach einem der Ansprüche 1 bis 4, **dadurch gekennzeichnet, dass** die Übertragungsmittel die Drehbewegung der Antriebswelle (17) in eine geradlinige Schiebebewegung des Arbeitswerkzeuges (24) umwandeln.

6. Arbeitsstab (10) nach Anspruch 5, **dadurch gekennzeichnet, dass** das Arbeitswerkzeug (24) in Führungsschienen (18A) verschiebbar ist, die der Arbeitsstab (10) trägt.

7. Arbeitsstab (10) nach Anspruch 6, **dadurch gekennzeichnet, dass** die Übertragungsmittel einen Exzenter (20) umfassen, der von der Antriebswelle (17) in Drehung versetzt wird, wobei der Exzenter (20) einen zylindrischen Kopf (20A) umfasst, der in ein Langloch (25A) eines Mitnehmers (25) eingreift, der mit dem Arbeitswerkzeug (24) fest verbunden ist, wobei sich das Langloch (25A) senkrecht zur Schieberichtung des Arbeitswerkzeuges (24) erstreckt.

8. Arbeitsstab (10) nach Anspruch 7, **dadurch gekennzeichnet, dass** die Antriebswelle (17) von einem Lager (21) geführt wird, das in der Nähe des Exzenters (20) angeordnet ist.

9. Arbeitsstab (100; 200) nach einem der Ansprüche 1 bis 4, **dadurch gekennzeichnet, dass** die Übertragungsmittel die Drehbewegung der Antriebswelle (103; 203) in eine kreisförmige und/oder pendelförmige Schiebebewegung des Arbeitswerkzeuges (112; 214) umwandeln.

10. Arbeitsstab (100; 200) nach Anspruch 9, **dadurch gekennzeichnet, dass** er einen oberen Teil (101; 201), der dazu bestimmt ist, starr am Motorgehäuse (120) befestigt zu werden, und einen unteren Teil (106; 210) umfasst, der in Bezug auf den oberen Teil (101; 201) beweglich ist, wobei der untere Teil (106; 210) das Arbeitswerkzeug (112; 214) trägt, und dadurch, dass die Antriebswelle (103; 203) den oberen Teil (101; 201) durchsetzt und ein unteres Ende (103B; 203B) aufweist, das in eine Aufnahme (106A; 210A) des unteren Teils (106; 210) mündet.

11. Arbeitsstab (100; 200) nach Anspruch 10, **dadurch gekennzeichnet, dass** das untere Ende (103B; 203B) des Antriebswelle (103; 203) einen Exzenter (105; 208) umfasst, der von der Antriebswelle (103; 203) in Drehung versetzt wird, wobei der Exzenter (105; 208) einen zylindrischen Kopf umfasst, der in ein Lager (107, 209) eingreift, das am unteren Teil (106; 210) des Arbeitsstabes befestigt ist.

12. Arbeitsstab (200) nach Anspruch 11, **dadurch gekennzeichnet, dass** der obere Teil (201) einen Führungsschaft (205) für die Antriebswelle (203) umfasst, und dadurch, dass der untere Teil (210) einen Körper umfasst, der den Führungsschaft (205) umgibt, wobei der Körper ein unteres Ende aufweist, welches das Lager (209) trägt.

13. Arbeitsstab (10; 100; 200) nach einem der Ansprüche 1 bis 12, **dadurch gekennzeichnet, dass** er abnehmbar am Motorgehäuse (1; 120) angebracht ist.

14. Elektrohaushaltsgerät für kulinarische Zubereitungen, umfassend ein Motorgehäuse (1; 120), das einen Drehantrieb (3) und einen Arbeitsstab (10; 100; 200) umfasst, der mit einer Antriebswelle (17; 103; 203) ausgestattet ist, die mit dem Drehantrieb drehfest verbunden ist, **dadurch gekennzeichnet, dass** der Arbeitsstab einem der Ansprüche 1 bis 13 entspricht.

15. Elektrohaushaltsgerät für kulinarische Zubereitungen nach Anspruch 14, **dadurch gekennzeichnet, dass** es ebenfalls einen Mixstab umfasst, der mit einem drehenden Schneidewerkzeug ausgestattet ist.
